(19) Europäisches Patentamt

European Patent Office

Office européen des brevets

(11) **EP 1 110 064 B1**

(12) **EUROPÄISCHE PATENTSCHRIFT**

(45) Veröffentlichungstag und Bekanntmachung des Hinweises auf die Patenterteilung:
**05.04.2006 Patentblatt 2006/14**

(21) Anmeldenummer: **99955655.8**

(22) Anmeldetag: **03.09.1999**

(51) Int Cl.:
*G01G 19/414* (2006.01) *B60R 21/00* (2006.01)

(86) Internationale Anmeldenummer:
**PCT/DE1999/002801**

(87) Internationale Veröffentlichungsnummer:
**WO 2000/014494 (16.03.2000 Gazette 2000/11)**

(54) **VERFAHREN UND VORRICHTUNG ZUM STEUERN EINES INSASSENSCHUTZMITTELS EINES FAHRZEUGS**

METHOD AND DEVICE FOR CONTROLLING AN OCCUPANT PROTECTION MEANS IN A VEHICLE

PROCEDE ET DISPOSITIF POUR COMMANDER UN MOYEN DE PROTECTION D'OCCUPANT D'UN VEHICULE

(84) Benannte Vertragsstaaten:
**DE FR GB IT**

(30) Priorität: **04.09.1998 DE 19840440**

(43) Veröffentlichungstag der Anmeldung:
**27.06.2001 Patentblatt 2001/26**

(73) Patentinhaber: **SIEMENS AKTIENGESELLSCHAFT**
**80333 München (DE)**

(72) Erfinder: **HERMANN, Stefan**
**D-93096 Köfering (DE)**

(56) Entgegenhaltungen:
**EP-A- 0 567 900        DE-A- 19 710 451**
**US-A- 5 164 901**

**Beschreibung**

Die Erfindung betrifft ein Verfahren und eine Vorrichtung zum Steuern eines Insassenschutzmittels eines Fahrzeugs.

Eine bekannte Vorrichtung (EP 0 156 930 A1) weist einen Beschleunigungssensor, einen Integrator und einen Schwellwertschalter sowie ein dem Insassenschutzmittel zugeordnetes Zündelement auf. Bei einem Aufprall des Fahrzeugs auf ein Hindernis wird die gemessene Beschleunigung, die bei einem Frontaufprall als Verzögerung gewöhnlich ein negatives Vorzeichen aufweist, integriert. Die integrierte Beschleunigung als Größe für den Geschwindigkeitsabbau wird mit einem Schwellwert verglichen. Bei Überschreiten des Schwellwerts durch die integrierte Beschleunigung wird das Zündelement gezündet.

Bei einer weiteren bekannten Vorrichtung (WO 90/03040-A) ist ein als mechanischer Verformungssensor ausgebildeter sogenannter Crashsensor in der Knautschzone des Fahrzeugs angeordnet. Der Abstand zwischen Crashsensor und Stoßstange bzw. Aufprallort ist dabei so bemessen, daß bei einer Verformung der Fahrzeugkarrosserie ausgehend von der Stoßstange bzw. dem Aufprallort bis hin zum Befestigungsort des Crashsensors dieser mitverformt wird und das Insassenschutzmittel auslöst.

Die Anordnung eines solchen Crashsensors in der Knautschzone des Fahrzeugs bringt einen erheblichen Verkabelungsaufwand mit sich. Die Leitungen vom und zum Crashsensor sind aufgrund ihrer exponierten Führung überdies unterbrechungs- und kurzschlußgefährdet.

Die deutsche Offenlegungsschrift DE 197 10 451 A1 zeigt ein System zum Auslösen einer Passagierschutzeinrichtung. Dabei wird eine Kollisionsbeschleunigung detektiert und des Weiteren eine geschätzte Kollisionskraft unter anderem auf der Basis der Fahrzeugmasse berechnet.

Aufgabe der Erfindung ist es, eine Vorrichtung und ein Verfahren zum Steuern eines Insassenschutzmittels in einem Fahrzeug anzugeben, das ohne Verwendung eines Deformationssensors dennoch ein rechtzeitiges Auslösen des Insassenschutzmittels erlaubt.

Der das Verfahren betreffende Teil der Erfindungsaufgabe wird durch die Merkmale des Patentanspruchs 1 gelöst, der die Vorrichtung betreffende Teil der Erfindungsaufgabe durch die Merkmale des Patentanspruchs 21.

Fast alle erfindungsgemäßen Merkmale und vorteilhaften Weiterbildungen sind im wesentlichen als Verfahrensschritte beschrieben. Die Recheneinheit der erfindungsgemäßen Vorrichtung ist dabei derart ausgebildet, diese Verfahrensschritte durchzuführen. Damit sind die Weiterbildungen auch als vorrichtungszugehörig offenbart.

Die Vorrichtung weist dabei einen Prozessor auf, der zumindest einen Speicher und eine Recheneinheit enthält. Gewöhnlich vor Inbetriebnahme des Insassenschutzsystems im Fahrzeug werden erforderliche Daten als Grundlage für aufprallverursachte Karosserieverformungsberechnungen in dem Speicher gespeichert. So wird die Fahrzeugmasse als Rechengröße vom Speicher bereitgestellt, wie auch eine Abhängigkeit zwischen einer Karosserieverformung und der dafür zu leistenden Arbeit. Diese Größen sind fahrzeugspezifische Größen. Ist die erfindungsgemäße Vorrichtung für den Betrieb in unterschiedlichen Fahrzeugtypen, z.B. in Typ A und Typ B vorgesehen, so ist bei der für Typ A vorgesehenen Vorrichtung die Fahrzeugmasse von Fahrzeugtyp A im Speicher abzulegen, bei der für Typ B vorgesehenen Vorrichtung die Fahrzeugmasse von Fahrzeugtyp B. Gleiches gilt für die Abhängigkeiten zwischen Karosserieverformung und dafür aufzuwendender Arbeit.

Als Größe für die Fahrzeugmasse kann die bloße Fahrzeugmasse verwendet werden, es kann aber auch die bloße Fahrzeugmasse zuzüglich einer den Fahrzeugbetrieb kennzeichnenden durchschnittlichen Zuladung (Insassen plus Gepäck) als Größe im Speicher abgelegt werden. Natürlich wird auch das Abspeichern von masseabhängigen Größen wie der Gewichtskraft unter Schutz gestellt.

Die Abhängigkeit zwischen Karosserieverformung und dafür aufzuwendender Arbeit wird vor Inbetriebnahme des Insassenschutzsystems vorzugsweise durch Crashversuche ermittelt. Dabei wird ein Aufprallhindernis in die Karosserie eines Fahrzeugs getrieben. Als Karosserieverformung wird dabei gewöhnlich der zurückgelegte Weg des Hindernisses in der Karosserie ab Aufprallort bezeichnet. Es kann aber auch eine virtuelle Wegstrecke als Karosserieverformung definiert werden, die daran festgemacht wird, daß z.B. ein erreichter festgelegter Verformungsgrad an einem Ort in der Knautschzone die Wegstrecke zwischen diesem Ort und dem Aufprallort als Karosserieverformung festlegt. Wird also das Hindernis in einem Crashtest frontal - d.h. mittig von vorne - in das Fahrzeug getrieben, so läßt sich vorzugsweise die Kraft F, mit der das Hindernis in die Fahrzeugknautschzone eindringt, über der zurückgelegten Eindringtiefe - also der Karosserieverformung, die im folgenden mit dem Wegkürzel s bezeichnet wird - aufzeichnen. Dabei ist die für die Karosserieverformung aufgewendete Kraft keineswegs linear : Ein Quetschen des Kühlers ist beispielsweise weit weniger kraftaufwendig als ein Verrücken des Motors.

Wird der Kraftverlauf durch einen Crashtest ermittelt, bei dem das Fahrzeug mit einer bestimmten Aufprallgeschwindigkeit gegegen ein Hindernis gefahren wird, so sollte dabei die Aufprallgeschwindigkeit derart hoch ausgebildet sein, daß eine möglichst große Karosserieverformung erzielt wird und damit ein möglichst großer Wertebereich für die Karosserieverformung zur Verfügung steht. Die dabei ggf. mangelhafte Auflösung im Kraftsignal kann z.B. durch einen weiteren Aufprall mit einer langsamen Aufprallgeschwindigkeit erhöht werden, der in einem begrenzten Wertebereich der Karosserieverformung ein hochaufgelöstes Kraftsignal liefert. Durch Extrapolation dieser "Low-Speed"- Crashtestergebnisse auf die "High-Speed"- Crashtestergebnisse kann ein im gesamten Wertebereich der Kraosserieverformung hochaufgelöster, verformungsabhängiger Kraftvrlauf gewonnen werden.

Durch Integraton des ermittelten Kraftverlaufs F(s) über die Karosserieverformung s erhält man die für jede Karosserieverformung erforderliche Arbeit A(s). Die zugehörige Gleichung lautet:

$$A(s) = \int_0^s F(s)ds$$

Diese Abhängigkeit zwischen Karosserieverformung s und dafür zu leistender Arbeit A(s), die fahrzeugtyp- und insbesondere karosseriestrukturabhängig ist, wird als Kennlinie oder als Polynom im Speicher abgelegt. Es wird deshalb im folgenden auch zeitweise von der Arbeitskurve anstelle von der Arbeit gesprochen.

Die Vorrichtung enthält ferner einen Beschleunigungssensor zum Aufnehmen der Fahrzeugbeschleunigung a. Der Beschleunigungssensor liefert gewöhnlich ein beschleunigungsproportionales Beschleunigungssignal für seine Empfindlichkeitsrichtung. Dabei weist der Beschleunigungssensor gewöhnlich eine seismische Masse auf. Das Meßprinzip kann z.B. piezoresistiv, piezoelektrisch oder kapazitiv ausgebildet sein. Die Empfindlichkeitsachse des Beschleunigungssensors ist vorzugsweise in die Richtung ausgerichtet, die Aufprallrichtung für die im Vorfeld getätigten Crashversuche zur Ermittlung der Arbeits-/Karosserieverformungskurve war. Vorzugsweise dient das Insassenschutzsystem zum Auslösen von Insassenschutzmitteln bei einem Frontaufprall: Dann wird die Arbeitskurve durch frontale Crashversuche ermittelt; dann ist auch der Beschleunigungssensor zur Aufnahme von frontalen Crashes ausgebildet und seine Empfindlichkeitsachse parallel zur Fahrzeuglängsachse ausgerichtet.

Bei einem Aufprall kann nun alleine durch Messung der Beschleunigung und mit Hilfe der abgespeicherten Daten das Insassenschutzmittel wirksam gesteuert werden.

Zu jedem Zeitpunkt wird dabei die Karosserieverformung im Fahrzeug ab dem Aufprallort, also bei einem Frontaufprall insbesondere ab der Stoßstange ermittelt.

Da die Kraft F zum Eindringen in die Fahrzeugkarosserie gleichzusetzen ist mit der dafür erforderlichen Beschleunigung a multipliziert mit der Fahrzeugmasse m, ergibt sich folgende Gleichung (1):

$$A(s) \doteq \int_0^s m \bullet a(s)ds$$

Mit der gemessenen Beschleunigung a, der gespeicherten Fahrzeugmasse m und der gespeicherten Arbeitskurve A(s) für diverse Karosserieverformungen s kann die Differentialgleichung unter Zuhilfenahme bekannter Lösungssysteme für Differentialgleichungen zu jedem Zeitpunkt während eines Unfalls nach der tatsächlich vorliegenden Karosserieverformung s aufgelöst werden.

Das Insassenschutzmittel, beispielsweise ein Airbag oder ein Gurtstraffer, wird nun in übereinstimmung mit dem Verfahren nach Anspruch 1 oder durch die Vorrichtung nach Anspruch 21 gesteuert und gegebenenfalls auch ausgelöst.

Mit der erfindungsgemäßen Vorrichtung und dem erfindungsgemäßen Verfahren kann ohne Bereitstellen eines als Crashsensor ausgebildeten Positionssensors in der Knautschzone - dafür nur unter Zuhilfenahme eines Beschleunigungssensors - zu jedem Zeitpunkt die Eindringtiefe des Hindernisses festgestellt werden. Diese Karosserieverformung stellt eine für das Auslösen des Insassenschutzmittels bedeutende Größe dar, da daraus eine unmittelbare Gefährdung des Insassen durch den eindringenden Gegenstand abgeleitet werden kann. Dieses Ergebnis ist insbesondere außergewöhnlich, da weder aus der aufgenommenen Beschleunigung noch durch doppelte Integration der Beschleunigung alleine auf die Karosserieverformung rückgeschlossen werden kann, da sich die Karosserieverformung mathematisch ableitet aus der Gleichung

$$s(t) = s_0 + v_0 \bullet t + \int_0^t \int_0^t a(t)dt^2$$

Zwar ist $s_0$ Null zu setzen, da gewöhnlich keine Vorabverformung vorliegt. Die Beschleunigung a wird gemessen.

Jedoch ist die Aufprallgeschwindigkeit $v_0$, mit der das Fahrzeug auf das Hindernis trifft, nicht bekannt. Damit läßt sich die Karosserieverformung erfindungsgemäß nur aus der gemessenen Beschleunigung und den abgespeicherten Größen ermitteln. Gleiches gilt für die im folgenden beschriebene Ermittlung der Aufprallgeschwindigkeit $v_0$.

In einer vorteilhaften Weiterbildung der Erfindung wird die Aufprallgeschwindigkeit $v_0$ aus der tatsächlichen Karosserieverformung s abgeleitet. Die Aufprallgeschwindigkeit $v_0$ ist im Gegensatz zu dem aus dem Stand der Technik bekannten und aus dem Beschleunigungssignal durch Integration abgeleiteten Geschwindigkeitsabbau eine Größe, die direkt für die auf das Fahrzeug übertragene Aufprallenergie steht. Die Aufprallgeschwindigkeit kann nicht alleine aus einer gemessenen Beschleunigung abgeleitet werden, auch nicht unter Zuhilfenahme eines Geschwindigkeitsmessers des Fahrzeugs, da letzterer lediglich die Absolutgeschwindigkeit des Fahrzeugs liefert, nicht jedoch die Aufprallgeschwindigkeit $v_0$, die sich aus der Absolutgeschwindigkeit des Fahrzeugs und der Geschwindigkeit des Aufprallhindernisses richtungsabhängig additiv zusammensetzt.

Die Aufprallgeschwindigkeit $v_0$ wird aus der tatsächlichen Karosserieverformung s abgeleitet mit Hilfe der Gleichung (2):

$$s(t) = \mathbf{v}_0 \cdot t + \int_0^t \int_0^t a(t)dt^2$$

mit s als tatsächliche Karosserieverformung, $v_c$ als Aufprallgeschwindigkeit, a als Beschleunigung und t als Zeit.

In einer weiteren vorteilhaften Weiterbildung der Erfindung kann die Aufprallgeschwindigkeit $v_0$ auch auf andere Art gewonnen werden: Dazu wird die die Karosserieverformung s liefernde Gleichung (2) in Gleichung (1) eingesetzt. Gleichung (1) wird daraufhin nach der Aufprallgeschwindigkeit $v_0$ aufgelöst. Das Auflösen der nichtlinearen Gleichung (1) kann dann durch iterative Schritte erfolgen. Dazu wird zunächst eine fiktive Aufprallgeschwindigkeit $v_0$ gewählt und in die Gleichung (1) eingesetzt. Abhängig von der Abweichung auf der Arbeitskurve bei Lösung der Gleichung (1) mit dieser fiktiven Aufprallgeschwindigkeit $v_0$ wird die fiktive Aufprallgeschwindigkeit $v_0$ geändert. In mehreren iterativen Berechnungsschritten kann somit die reale Aufprallgeschwindigkeit $v_0$ gewonnen werden. Die Aufprallgeschwindigkeit $v_0$ unterliegt damit einem rechentechnisch bedingten Einschwingvorgang. Vorzugsweise wird also eine gemittelte Aufprallgeschwindigkeit oder eine späte Aufprallgeschwindigkeit nach einem Einschwingvorgang als Grundlage für weitere Berechnungen verwendet.

Zum Auslösen des Insassenschutzmittels bieten sich unterschiedliche vorteilhafte Lösungen an:

Zum einen kann das Insassenschutzmittel ausgelöst werden, wenn die Karosserieverformung einen Grenzwert überschreitet. Hierbei kann jedoch ein grenzwertiges Eindringen des Hindernisses infolge eines langsamen Aufpralls zu einem relativ späten Zeitpunkt ab Aufprallbeginn, welcher gewöhnlich durch das Überschreiten eines Mindestbeschleunigungswertes gekennzeichnet ist, erfolgen. Dadurch könnte der inzwischen weit vorverlagerte Insassen durch ein Auslösen des Insassenschutzmittels eher verletzt als geschützt werden. In vorteilhafter Weise wird also das Insassenschutzmittel nur dann ausgelöt, wenn der Karosserieverformungsgrenzwert innerhalb einer vorgegebenen Zeit ab Aufprallbeginn erreicht oder überschritten wird. Die Aufprallenergie spiegelt sich bei dieser Auslöseentscheidung also in der Schnelligkeit der Karosserieverformung wieder. Bei einem Aufprall mit hoher Geschwindigkeit erfolgt ein Auslösen zu einem frühen Zeitpunkt, da das Grenzmaß der Karosserieverformung schnell erreicht ist. Bei einem langsamen Aufprall, ggf. mit einer für eine lange Zeitspanne einwirkenden geringen Kraft wird das Grenzmaß der Karosserieverformung zu einem für ein Auslösen des Insassenschutzmittels zu späten Zeitpunkt erreicht.

In einer vorteilhaften Weiterbildung wird das Insassenschutzmittel dann ausgelöst, wenn die ermittelte Aufprallgeschwingigkeit $v_0$ einen vorgegebenen Grenzwert überschreitet.

In einer weiteren vorteilhaften Weiterbildung der Erfindung wird zunächst eine noch zu erwartende Energieaufnahme $E_e$ für das Fahrzeug ermittelt nach der Gleichung:

$$E_e = \frac{m \cdot \mathbf{v}_0^2}{2} - F(s)$$

bzw.

$$E_e = \frac{m}{2}(\mathbf{v}_0 + \int_0^t a(t)dt)^2$$

Die Bedeutung der Größen erschließt sich aus dem Vorbeschriebenem.

Vorzugsweise wird dann eine Freigabe für das Insassenschutzmittel geliefert, wenn die tatsächliche Karosserieverformung s einen Grenzwert überschreitet und gleichzeitig die noch zu erwartende Energieaufnahme einen weiteren Grenzwert überschreitet. Qualitativ ist dieser Auslöseansatz dem vorhergehenden Auslöseansatz mit der zeitgrenzwertigen Karosserieverformung gleichzusetzen, da aufprallbedingt bei einer großen Karosserieverformung und einem noch hohen Maß an aufzunehmender Energie ein schwerer Aufprall vorliegen muß. Wird bei Überschreiten des Karosseriegrenzwertes jedoch nur ein noch geringes Maß an aufzunehmender Energie erwartet, so muß wohl ein langsamer Aufprall vorliegen und bereits erhebliche Zeit ab Aufprallbeginn verstrichen sein. Ein Auslösen wird dann nicht unterstützt.

In einer weiteren vorteilhaften Weiterbildung der Erfindung wird eine Abschätzung für die Beschleunigung a (t+$\Delta$t) für einen zukünftigen Zeitpunkt t+$\Delta$t vorgenommen. Die Abschätzung erfolgt dabei nach Maßgabe von Gleichung (2):

$$\text{Gleichung (3):} \quad s(t + \Delta t) = s(t) + \frac{ds}{dt}\Delta t = \mathbf{v}_0 \cdot (t + \Delta t) + \int_0^t\int_0^t a(t + \Delta t)dt^2.$$

Die differentielle Änderung $\frac{ds}{dt}\Delta t$ der Karosserieverformung in der zukünftigen Zeitspanne $\Delta$t ist aus dem bisherigen Karosserieverformungsverlauf z.B. durch Extrapolation - z.B. linear durch Tangentenbildung - etc. abschätzbar. Gleichung (3) kann damit nach der geschätzten, zukünftigen Beschleunigung a(t+$\Delta$t) aufgelöst werden.

Alternativ zu einer unmittelbar Verwendung der geschätzten Beschleunigung a (t+$\Delta$t) kann auch eine geschätzte Geschwindigkeit v(t+$\Delta$t) ermittelt werden, die sich durch zeitliche Integration der geschätzten Beschleunigung a(t+$\Delta$t) ergibt. Die Verwendung der geschätzten Geschwindigkeit v(t+Dt) anstelle der geschätzen Beschleunigung a(t+$\Delta$t) ist insofern von Vorteil als eine filternde Wirkung der geschätzten Beschleunigung a(t+$\Delta$t) eintritt.

Die abgeschätzte Beschleunigung a(t+$\Delta$t) oder die geschätzte Geschwindigkeit v(t+$\Delta$t) kann dabei in mehrfacher Hinsicht vorteilhaft verwendet werden:

Zum einen läßt sich unter Zuhilfenahme der abgeschätzten Beschleunigung a(t+$\Delta$t) eine abgeschätzte Insassenvorverlagerung x(t+$\Delta$t) für diesen zukünftigen Zeitpunkt t+$\Delta$t ermitteln. Die geschätzte Insassenvorverlagerung eines Fahrzeuginsassen wird nach Maßgabe der Gleichung

$$x(t + \Delta t) = \int_0^t\int_0^t a(t + \Delta t)dt^2$$

ermittelt.

Ein Auslösen des Insassenschutzmittels kann vorzugsweise auch dann eingeleitet werden, wenn aufprallbedingt eine aus der Beschleunigung abgeleitete Mindestinsassenvorverlagerung überschritten wird. Problem bei der Auslösung eines Airbags aufgrund der derart berechneten Vorverlagerung ist, daß ein Auslösebefehl zu einem frühen Zeitpunkt abgesetzt werden muß, da ein Aufblasen eines Frontairbags auf sein volles Volumen ca 30 ms Zeit beansprucht. Zum Auslösezeitpunkt muß also die Insassenvorverlagerung für einen Zeitpunkt 30 ms in die Zukunft abgeschätzt werden und anhand dieser geschätzten Vorverlagerung bewertet werden, ob eine Auslösen überhaupt erforderlich ist. Durch Verwendung der ermittelten abgeschätzten Beschleunigung a(t+$\Delta$t) kann auch die Insassenvorverlagerung x (t+$\Delta$t) vorteilhaft mit $\Delta$t von etwa 30 ms abgeschätzt werden und bei Überschreiten eines zugeordneten Grenzwertes damit eine Freigabe zusammen mit anderen Kriterien für das Insassenschutzmittel bewirken.

Zum anderen läßt sich diese für einen zukünftigen Zeitpunkt abgeschätzte Beschleunigung a(t+$\Delta$t) vorteilhaft zur Präzisierung der Auslöseentscheidung oder zur Aufprallwinkelbestimmung verwenden.

In beiden Fällen sind im Speicher karosserieverformungsabhängige Arbeitskurven nicht nur für einen einzigen Aufprallwinkel abgespeichert, sondern für unterschiedliche Aufprallwinkel, z.B. für einen Frontalaufprall mit 0 Grad zur Fahrzeuglängsachse und für je einen Schrägaufprall mit +/- 30 Grad zur Fahrzeuglängsachse. Da die Karosseriestruktur in den unterschiedlichen Richtungen unterschiedlich ausgebildet ist, ist auch der Arbeitsaufwand zum Erzielen einer Karosserieverformung richtungsabhängig unterschiedlich. Die Arbeitskurven oder Polynome werden wie vorbeschrieben empirisch ermittelt, nun jedoch aufprallrichtungsäbhängig. Mithin sind mehrere Arbeitskurven $A_\alpha$(s) abhängig vom Aufprallwinkel $\alpha$ abgespeichert.

Zum Präzisieren des Auslöseverfahrens gilt es, in Unkenntnls des Aufprallwinkels $\alpha$ bei einem realen Unfall bei der Berechnung der Karosseriedeformation s diejenige Arbeitskurve A(s) unter den winkelabhängigen Arbeitskurven $A_\alpha$(s) auszuwählen, deren zugrundegelegter Aufprallwinkel $\alpha$ am geringsten von dem wahren Aufprallwinkel $\alpha$ abweicht. Dabei wird die Beschleunigung a(t+$\Delta$t) zu einem zukünftigen Zeitpunkt anhand jeder winkelabhängigen Arbeitskurve $A_\alpha$(s) abgeschätzt. Als Resultat ergeben sich eine Anzahl von winkelabhängigen abgeschätzten Beschleunigungen $a_\alpha$ (t+$\Delta$t) für einen zukünftigen Zeitpunkt. Wird der zukünftige Zeitpunkt t+$\Delta$t real erreicht, so werden die geschätzten Beschleunigungen $a_\alpha$(t+$\Delta$t) mit der dann durch den Beschleunigungssensor aufgenommenen realen Beschleunigung a verglichen.

Im folgenden kann zum einem in vorteilhafter Weise diejenige aufprallwinkelabhängige Arbeitskurve $A_\alpha$(s) für weitere Berechnungen verwendet werden, die die Grundlage für diejenige geschätzte Beschleunigung $a_\alpha$(t+$\Delta$t) bildet, die die geringste Abweichung von der aufgenommenen Beschleunigung a aufweist.

Zum anderen kann diese derart ermittelte aufprallwinkelabhängige Arbeitskurve $A_\alpha$(s) den Aufprallwinkel $\alpha$ in etwa vorgeben. Dieser kann zur richtungsabhängigen Auswahl eines von mehrere Insassenschutzmitteln verwendet werden.

Vorzugsweise wird bei Vorliegen der vorgenannten Bedingungen das Insassenschutzmittel direkt ausgelöst. In einer weiteren vorteilhaften Weiterbildung dient jedoch das Überschreiten der Grenzwerte durch zugehörige Größen dem Umsetzen einer sogenannten Safing-Funktion, die bei Überschreiten der Grenzwerte ein Freigabesignal liefert: Dabei wird ein Aufprall zusätzlich mit anderen Mitteln bewertet, z.B. mit einem weiteren Beschleunigungssensor oder mit einem Crashsensor oder aber auch mit einem weiteren Auswerter oder mit einem weiteren Auslösealgorithmus. Diese weiteren Mittel liefern ein Auslösesignal. Das Auslösesignal wird UND-verknüpft mit dem von der erfindungsgemäßen Vorrichtung gelieferten Freigabesignal. Lediglich wenn beide Signale vorliegen, wird das Insassenschutzmittel ausgelöst. Gewöhnlich sind die Parameter der erfindungsgemäßen Vorrichtung derart bemessen, z.B. die Grenzwerte niedrig angesetzt, daß mit dem Freigabesignal ein Zeitfenster geschaffen wird, in dem das Auslösesignal zum bestmöglichen Zeitpunkt plaziert werden kann.

Weitere vorteilhafte Weiterbildungen der Erfindung ergeben sich aus den Unteransprüchen.

Ausführungsbeispiele der Erfindung und ihrer Weiterbildungen werden anhand der Zeichnung näher erläutert. Es zeigen:

Figur 1    ein Blockschaltbild der erfindungsgemäßen Vorrichtung,
Figur 2    einen Ablaufplan des erfindungsgemäßen Verfahrens,
Figur 3    ein Fahrzeug mit der erfindungsgemäßen Vorrichtung, und
Figur 4    ein dem Verfahren zugrundeliegendes Diagramm.

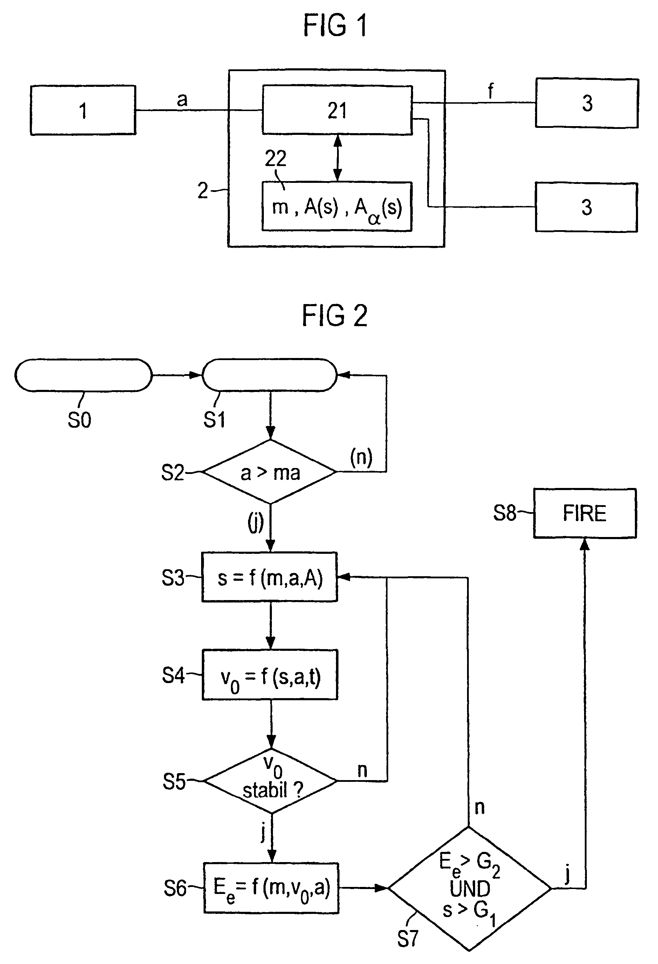

Figur 1 zeigt ein Blockschaltbild der erfindungsgemäßen Vorrichtung mit einem Beschleunigungssensor 1 einem Prozessor 2 mit einer Recheneinheit 21 und einem Speicher 22, vorzugsweise ein nichtflüchtiger Speicher wie ein EEPROM, und mit zwei mit dem Prozessor 2 verbundenen Insassenschutzmitteln 3.

Der Beschleunigungssensor 1 liefert die aufgenommene Beschleunigung a zur Auswertung an den Prozessor 2. Die Recheinheit 21 ermittelt in vorbeschriebener Weise, ob ein Auslösen eines oder mehrerer der Insassenschutzmittel 3 erforderlich ist. Das Auslösen erfolgt durch ein Freigabesignal f.

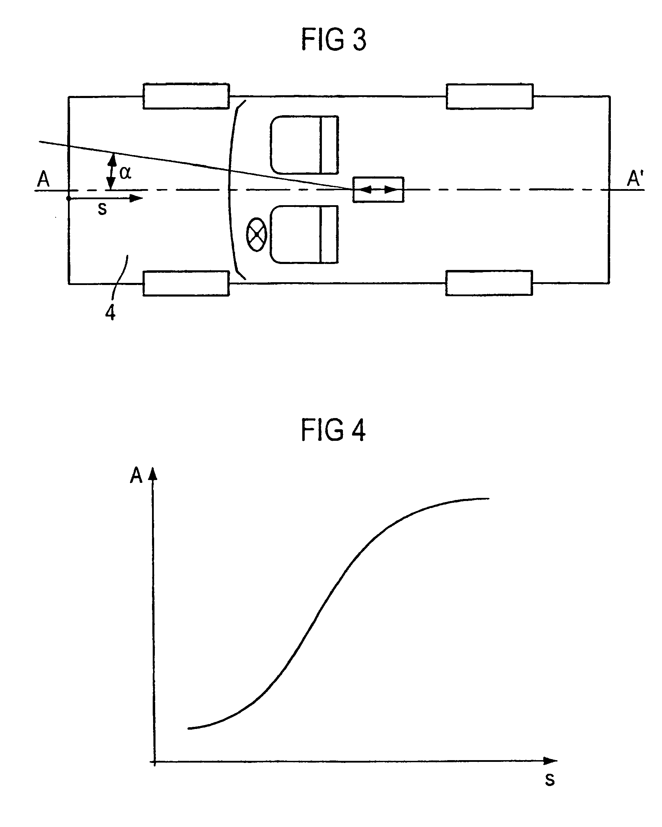

Die Recheneinheit 21 bedient sich zur Durchführung des erfindungsgemäßen Verfahrens im Speicher 22 abgelegter Größen, nämlich der Fahrzeugmasse m und der Funktion Arbeit A in Abhängigkeit der durch die Arbeit A in der Fahrzeugkarosserie in einer vorgegebenen Richtung erzielten Karosserieverformung s, die wie die Fahrzeugmasse m kraftfahrzeugspezifisch ist. Eine beispielhafte Arbeitskurve A(s) ist in Figur 4 gezeigt.

Gegebenenfalls sind winkelabhängig mehrere Arbeitskurven für Karosserieverformungen $A_\infty$(s) im Speicher abgelegt, die von der Recheneinheit 21 in vorbeschriebener Weise verwendet werden können.

Dabei ist gemäß Figur 3, die ein Kraftfahrzeug mit einer Fahrzeuglängsachse A-A' darstellt, ein beispielhafter Winkel $\infty$ zur Fahrzeuglängsachse A-A' eingezeichnet. Ebenfalls eingezeichnet ist eine beispielhafte Karosserieverformung s, ausgehend von einer fiktiven Stoßstange des Fahrzeugs entlang der Längsachse A-A' in der Knautschzone 4 des Fahrzeugs.

Der Beschleunigungssensor 1 wie auch der zugehörige Prozessor sind in einem gemeinsamen Steuergerät in etwa im Fahrzeugzentrum angeordnet.

Figur 2 zeigt einen Ablaufplan des erfindungsgemäßen Verfahrens. Mit Schritt S0 wid das Insassenschutzsystem initialisiert und geht in den Zustand S1 über, bei dem es mit Schritt S2 permanent überprüft, ob die Beschleunigung a einen Mindestwert ma überschritten hat, der einen Beginn der Aufprallberechnungen nach sich zieht (j). Wird die Mindestbeschleuniung ma erkannt (j), so wird im Schritt S3 die Karosserieverformung s in Abhängigkeit der Fahrzeugmasse m, der aufgenommen Beschleunigung a und der abgespeicherten Arbeitskurve A(s) nach vorstehenden Maßgaben errechnet, bevor im Schritt S4 ebenfalls nach vorstehenden Gleichungen die Aufprallgeschwindigkeit $v_0$ als Funktion f der berechneten Karosserieverformung s, der Beschleunigung a und der Zeit t berechnet wird. Erweist sich die ermittelte Aufprallgeschwindigkeit $v_0$ nach mehreren Berechnungsläufen im Schritt S5 stabil (j), so wird im Schritt S6 die noch zu erwartende abzubauenede Energie $E_e$ als Funktion f beispielsweise der Fahrzeugmasse m, der Aufprallgeschwindigkeit $v_0$ und der Beschleunigung a ermittelt. Ist die Aufprallgeschwinndigkeit im Schritt S5 noch nicht stabil (n), so ist ein erneuter Berechnungszyklus mit den Schritten S3 und S4 erforderlich.

Das Auslösekriterium für das Insassenschutzmittel wird in Schritt S7 überprüft: Überschreiten die Karosserieverformung s und die zu erwartende Energie $E_e$ zugehörige Grenzwerte G1 und G2 (j), so wird im Schritt S8 das Insassenschutzmittel ausgelöst. Ist mindestens einer der Grenzwerte G1 oder G2 nicht durch das zugeordnete Signal überschritten (n), so wird zu einem weiteren Zeitpunkt die Karosserieverformung s neu berechnet.

Die Grenzwerte G1 und/oder G2 können konstant oder variabel ausgebildet sein.

## Patentansprüche

1. Verfahren zum Steuern eines Insassenschutzmittels eines Fahrzeugs,
   bei dem die Fahrzeugmasse (m) als Rechengröße bereitgestellt wird,
   bei dem eine Abhängigkeit zwischen einer Karosserieverformung (s) und der dafür zu leistenden Arbeit (A(s)) bereitgestellt wird,
   bei dem die Fahrzeugbeschleunigung (a) aufgenommen wird, und
   bei dem das Insassenschutzmittel (3) abhängig von der Fahrzeugmasse (m), der Arbeit (A(s)) und der Beschleunigung (a) gesteuert wird.

2. Verfahren nach Anspruch 1, bei dem die tatsächliche Karosserieverformung (s) abhängig von der Beschleunigung (a), der Arbeit (A) und der Fahrzeugmasse (m) ermittelt wird.

3. Verfahren nach Anspruch 2, bei dem die tatsächliche Karosserieverformung (s) abgeleitet wird aus der Gleichung

$$A(s) = \int_0^s m \bullet a(s)ds$$

mit m als Fahrzeugmasse, a als Beschleunigung, s als Karosserieverformung und A der dafür erforderlichen Arbeit.

4. Verfahren nach Anspruch 2 oder Anspruch 3, bei dem das Insassenschutzmittel (3) abhängig von der tatsächlichen Karosserieverformung (s) gesteuert wird.

5. Verfahren nach einem der vorhergehenden Ansprüche, bei dem die Aufprallgeschwindigkeit ($v_0$) abhängig von der Beschleunigung (a), der Arbeit (A) und der Fahrzeugmasse (m) ermittelt wird.

6. Verfahren nach Anspruch 5, bei dem das Insassenschutzmittel (3) abhängig von der ermittelten Aufprallgeschwindigkeit ($v_0$) gesteuert wird.

7. Verfahren nach einem der Ansprüche 2 oder 3 und nach Anspruch 5, bei dem die Aufprallgeschwindigkeit ($v_0$) aus der tatsächlichen Karosserieverformung (s) abgeleitet wird.

8. Verfahren nach Anspruch 7, bei dem die Aufprallgeschwindigkeit ($v_0$) aus der tatsächlichen Karosserieverformung (s) abgeleitet wird aus der Gleichung

$$s(t) = \mathbf{v}_0 \bullet t + \int_0^t \int_0^t a(t)dt$$

mit s als tatsächliche Karosserieverformung, $v_0$ als Aufprallgeschwindigkeit, a als Beschleunigung und t als Zeit.

9. Verfahren nach einem der Ansprüche 5 bis 8, bei dem die Aufprallgeschwindigkeit ($v_0$) zu mehreren Zeitpunkten (t) berechnet wird, und bei dem eine gemittelte Aufprallgeschwindigkeit oder eine späte Aufprallgeschwindigkeit nach einem Einschwingvorgang als Grundlage für weitere Berechnungen verwendet wird.

10. Verfahren nach einem der vorhergehende Ansprüche, bei dem eine noch zu erwartende Energieaufnahme ($E_e$) für

das Fahrzeug ermittelt wird.

11. Verfahren nach Anspruch 10, bei dem die zu erwartende Energieaufnahme E$_e$ ermittelt wird nach der Gleichung:

$$E_e = \frac{m}{2} \bullet (v_0 + \int_0^t a(t)dt)^2$$

mit in als Fahrzeugmasse, a las Beschlenmigung, t als Zeit und v$_0$ als Aufprallgeschwindigkeit.

12. Verfahren nach Anspruch 4, bei dem eine Freigabe (f) für das Insassenschutzmittel (3) geliefert wird, wenn die tatsächliche Karosserieverformung (s) innerhalb einer vorgegebenen Zeit ab Aufprallbeginn einen Grenzwert (G1) überschreitet.

13. Verfahren nach Anspruch 4 und Anspruch 10 oder Anspruch 11, bei dem eine Freigabe (f) für das Insassenschutzmittel (3) geliefert wird, wenn die tatsächliche Karosserieverformung (s) einen Grenzwert (G1) überschreitet und gleichzeitig die noch zu erwartende Energieaufnahme (E$_e$) einen weiteren Grenzwert (G2) überschreitet.

14. Verfahren nach einem der vorhergehenden Ansprüche, bei dem eine Abschätzung einer Beschleunigung (a(t+$\Delta$t)) für einen zukünftigen Zeitpunkt (t+$\Delta$t) erfolgt.

15. Verfahren nach Anspruch 14, bei dem unter Zuhilfenahme der abgeschätzten Beschleunigung (a(t+$\Delta$t)) eine abgeschätzte Insassenvorverlagerung (x(t+$\Delta$t)) für diesen zukünftigen Zeitpunkt (t+$\Delta$t) ermittelt wird, und bei dem eine Freigabe (f) für das Insassenschutzmittel (3) geliefert wird, wenn die zukünftige Insassensvorverlagerung (x (t+$\Delta$t)) einen Schwellwert überschreitet.

16. Verfahren nach einem der Ansprüche 14 oder 15, bei dem die Abhängigkeit zwischen der Karosserieverformung (s) und der dafür zu leistenden Arbeit (A(s)) aufprallwinkelabhängig (A$_\alpha$(s)) bereitgestellt wird, bei dem eine zukünftige Beschleunigung für jede winkelabhängige Arbeit abgeschätzt wird, und bei der eine Abschätzung der Beschleunigung (a$_\alpha$(t+$\Delta$t)) für den zukünftigen Zeitpunkt (t+$\Delta$t) erfolgt auf Grundlage jeder bereitgestellten aufprallwinkelabhängigen Arbeitskurve (A$_\alpha$(s)), und bei dem die zu dem zukünftigen Zeitpunkt (t+$\Delta$t) aufgenommene Beschleunigung (a) mit den geschätzten Beschleunigungen (a$_\alpha$(t+$\Delta$t)) verglichen wird.

17. Verfahren nach Anspruch 16, bei dem diejenige aufprallwinkelabhängige Arbeitskurve (A$_\alpha$(s)) für weitere Berechnungen verwendet wird, die die Grundlage für diejenige geschätzte Beschleunigung (a$_\alpha$(t+$\Delta$t)) bildet, die die geringste Abweichung von der aufgenommenen Beschleunigung (a) aufweist.

18. Verfahren nach Anspruch 16, bei dem diejenige aufprallwinkelabhängige Arbeitskurve (A$_\alpha$(s)) den Aufprallwinkel ($\alpha$) vorgibt, die die Grundlage für diejenige geschätzte Beschleunigung (a$_\alpha$(t+$\Delta$t)) bildet, die die geringste Abweichung von der aufgenommenen Beschleunigung (a) aufweist, und bei dem abhängig von dem derart ermittelten Aufprallwinkel ($\alpha$) ein Insassenschutzmittel (3) gesteuert wird.

19. Verfahren nach einem der vorhergehenden Ansprüche, bei dem die für eine Karosserieverformung (s) zu leistende Arbeit (A(s)) bei einem Crashversuch ermittelt wird.

20. verfahren nach Anspruch 19, bei dem die für eine Karosserieverformung (s) zu leistende Arbeit (A(s)) bei einem Crashversuch mit einer hohen Aufprallgeschwindigkeit und bei einem Crashversuch mit einer niedrigen Aufprallgeschwindigkeit ermittelt wird.

21. Vorrichtung zum Steuern eines Insassenschutzmittels eines Fahrzeugs,
mit einem Beschleunigungssensor (1) zum Aufnehmen einer Fahrzeugbeschleunigung (a),
mit einem Speicher (22), in dem die Fahrzeugmasse (m) und die Abhängigkeit zwischen einer Karosserieverformung (s) und der dafür zu leistenden Arbeit (A(s)) gespeichert ist, und
mit einer Recheneinheit (21), die ausgebildet ist zum Steuern des Insassenschutzmittels (3) abhängig von der Beschleunigung (a), der Arbeit (A) und der Fahrzeugmasse (m).

**Claims**

1. Method for controlling a vehicle occupant protection system,
   in which the mass (m) of the vehicle is made available as an operand,
   in which the dependence between a deformation (s) of the vehicle body and the work (A(s)) to be performed for said deformation is made available,
   in which the vehicle acceleration (a) is recorded, and
   in which the vehicle occupant means (3) is controlled as a function of the mass (m) of the vehicle, the work (A (s)) and the acceleration (a).

2. Method according to Claim 1, in which the actual deformation (s) of the vehicle body is determined as a function of the acceleration (a), the work (A) and the mass (m) of the vehicle.

3. Method according to Claim 2, in which the actual deformation (s) of the vehicle body is derived from the equation

$$A(s) = \int_0^a m \cdot a(s)ds$$

where m is the mass of the vehicle, a is the acceleration, s is the deformation of the vehicle body and A is the work necessary for it.

4. Method according to Claim 2 or 3, in which the vehicle occupant protection means (3) is controlled as a function of the actual deformation (s) of the vehicle body.

5. Method according to one of the preceding claims, in which the impact velocity ($v_0$) is determined as a function of the acceleration (a), the work (A) and the mass (m) of the vehicle.

6. Method according to Claim 5, in which the vehicle occupant protection means (3) is controlled as a function of the impact velocity ($v_0$) which is determined.

7. Method according to one of Claims 2 or 3 and according to Claim 5, in which the impact velocity ($v_0$) is derived from the actual deformation (s) of the vehicle body.

8. Method according to Claim 7, in which the impact velocity ($v_0$) is derived from the actual deformation (s) of the vehicle body, from the equation

$$S(t) = v0 \cdot t + \int_0^t \int_0^t a(t)dt$$

where s is the actual deformation of the vehicle body, v0 is the impact velocity, a is the acceleration and t is the time.

9. Method according to one of Claims 5 to 8, in which the impact velocity ($v_0$) is calculated at a plurality of times (t), and in which an averaged impact velocity or a late impact velocity is used, after a transient response, as a basis for further calculations.

10. Method according to one of the preceding claims, in which a further expected power drain ($E_e$) for the vehicle is determined.

11. Method according to Claim 10, in which the expected power drain $E_e$ is determined according to the equation:

$$E_e = \frac{m}{2} \cdot (v_0 + \int_0^t a(t)\,dt)^2$$

where m is the mass of the vehicle, a is the acceleration, t is the time and $v_0$ is the impact velocity.

12. Method according to Claim 4, in which an enable (f) is supplied for the vehicle occupant protection means (3) if the actual deformation (s) of the vehicle body exceeds a limiting value (G1) within a predefined time from the start of the impact.

13. Method according to Claim 4 and Claim 10 or Claim 11, in which an enable (f) is supplied for the vehicle occupant protection means (3) if the actual deformation (s) of the vehicle body exceeds a limiting value (G1) and simultaneously the further expected power drain ($E_e$) exceeds a further limiting value (G2).

14. Method according to one of the preceding claims, in which an acceleration (a(t+Δt)) is estimated for a future time (t+Δt).

15. Method according to Claim 14, in which an estimated forward displacement (x(t+Δt)) of the vehicle occupant is determined for this future time (t+Δt) using the estimated acceleration (a(t+Δt)), and in which an enable (f) is supplied for the vehicle occupant protection means (3) if the future forward displacement (x(t+ t)) of the vehicle occupant exceeds a threshold value.

16. Method according to one of Claims 14 or 15, in which the dependence between the deformation (s) of the vehicle body and the work (A(s)) to be performed for said deformation is made available as a function of the impact angle ($A_\alpha$(s)), in which a future acceleration is estimated for each angle-dependent item of work and in which the acceleration ($a_\alpha$(t+Δt)) is estimated for the future time (t+Δt) on the basis of each impact-angle-dependent work curve ($A_\alpha$(s)) made available, and in which the acceleration (a) which is recorded at the future time (t+Δt) is compared with the estimated accelerations ($a_\alpha$(t+Δt)).

17. Method according to Claim 16, in which that impact-angle-dependent work curve ($A_\alpha$(s)) which forms the basis for the estimated acceleration ($a_\alpha$(t+Δt)) which has the least deviation from the recorded acceleration (a) is used for further calculations.

18. Method according to Claim 16, in which that impact-angle-dependent work curve ($A_\alpha$(s)) which forms the basis for the estimated acceleration ($a_\alpha$(t+Δt)) which has the least deviation from the recorded acceleration (a) defines the impact angle ($\alpha$), and in which a vehicle occupant protection means (3) is controlled as a function of the impact angle ($\alpha$) which is determined in this way.

19. Method according to one of the preceding claims, in which the work (A(s)) to be performed for a deformation (s) of the vehicle body is determined in a crash trial.

20. Method according to Claim 19, in which the work (A(s)) to be performed for a deformation (s) of the vehicle body is determined in a crash trial with a high impact velocity and in a crash trial with a low impact velocity.

21. Device for controlling a vehicle occupant protection means of a vehicle,
having an acceleration sensor (1) for recording a vehicle acceleration (a),
having a memory (22) in which the mass (m) of the vehicle and the dependence between a deformation (s) of the vehicle body and the work (A(s)) to be performed for said deformation is stored, and having an arithmetic unit (21) which is designed to control the vehicle occupant protection means (3) as a function of the acceleration (a), the work (A) and the mass (m) of the vehicle.

**Revendications**

1. Procédé pour commander un moyen de protection des occupants d'un véhicule,
dans lequel la masse (m) du véhicule est introduite en tant que grandeur de calcul,
dans lequel une relation de dépendance entre une déformation (s) de la carrosserie et le travail (A(s)) à produire pour cela est introduite,
dans lequel l'accélération (a) du véhicule est détectée et
dans lequel le moyen de protection des occupants (3) est commandé en fonction de la masse (m) du véhicule, du travail (A(s)) et de l'accélération (a).

2.   Procédé selon la revendication 1, dans lequel la déformation effective (s) de la carrosserie est déterminée en fonction de l'accélération (a), du travail (A) et de la masse (m) du véhicule.

3.   Procédé selon revendication 2, dans lequel la déformation effective (s) de la carrosserie est dérivée de l'équation

$$A(s) = \int_0^s m \bullet a(s)ds$$

où $\underline{m}$ représente la masse du véhicule, a l'accélération, $\underline{s}$ la déformation de la carrosserie et A le travail nécessaire pour cela.

4.   Procédé selon la revendication 2 ou la revendication 3, dans lequel le moyen de protection des occupants (3) est commandé en fonction de la déformation effective (s) de la carrosserie.

5.   Procédé selon une des revendications précédentes, dans lequel la vitesse de collision ($v_0$) est obtenue en fonction de l'accélération (a), du travail (A) et de la masse (m) du véhicule.

6.   Procédé selon la revendication 5, dans lequel le moyen de protection des occupants (3) est commandé en fonction de la vitesse de collision ($v_0$) obtenue.

7.   Procédé selon une des revendications 2 ou 3 et selon la revendication 5, dans lequel la vitesse de collision ($v_0$) est dérivée de la déformation effective (s) de la carrosserie.

8.   Procédé selon la revendication 7, dans lequel la vitesse de collision ($v_0$) est dérivée de la déformation effective (s) de la carrosserie en appliquant l'équation

$$s(t) = V_0 \bullet t + \int_0^t \int_0^t a(t)dt$$

où $\underline{s}$ représente la déformation effective de la carrosserie, $v_0$ la vitesse de collision, $\underline{a}$ l'accélération et $\underline{t}$ le temps.

9.   Procédé selon une des revendications 5 à 8, dans lequel la vitesse de collision ($v_0$) est calculée à plusieurs instants (t) et dans lequel une vitesse de collision moyenne ou une vitesse de collision plus tardive après un phénomène transitoire est utilisée comme base pour de nouveaux calculs.

10.  Procédé selon une des revendications précédentes, dans lequel on détermine une absorption d'énergie qu'on doit encore attendre ($E_e$) pour le véhicule.

11.  Procédé selon la revendication 10, dans lequel l'absorption d'énergie escomptée $E_e$ est obtenue en appliquant l'équation :

$$E_e = \frac{m}{2} \bullet (V_0 + \int_0^t a(t)dt)^2$$

où $\underline{m}$ représente la masse du véhicule, $\underline{a}$ l'accélération, $\underline{t}$ le temps et $v_0$ la vitesse de collision.

12.  Procédé selon la revendication 4, dans lequel un déblocage (f) pour le moyen de protection des occupants (3) est émis lorsque la déformation effective (s) de la carrosserie dépasse une valeur limite (G1) dans un intervalle de temps prédéterminé qui suit le début de la collision.

**13.** Procédé selon la revendication 4 et la revendication 10 ou la revendication 11, dans lequel un déblocage (f) pour le moyen de protection des occupants (3) est émis lorsque la déformation effective (s) de la carrosserie dépasse une valeur limite (G1) et qu'en même temps l'absorption d'énergie qu'on doit encore attendre ($E_e$) dépasse une autre valeur limite (G2).

**14.** Procédé selon une des revendications précédentes, dans lequel il s'effectue une estimation d'une accélération (a(t+ $\Delta$t)) pour un instant futur ((t+ $\Delta$t)).

**15.** Procédé selon la revendication 14, dans lequel, à l'aide de l'accélération estimée (a(t+ $\Delta$t)), on détermine une avancée estimée (x(t+ $\Delta$t)) des occupants pour cet instant futur et dans lequel un déblocage (f) pour le moyen de protection des occupants (3) est émis lorsque l'avancée future des occupants (x(t+ $\Delta$t)) dépasse une valeur de seuil.

**16.** Procédé selon les revendications 14 ou 15, dans lequel la relation de dépendance entre la déformation (s) de la carrosserie et le travail (A(s)) à produire pour cela sont introduits en fonction de l'angle de collision ($A_\alpha$(s)), auquel cas une accélération future est estimée pour chaque travail en fonction de l'angle et dans lequel il se produit une estimation de l'accélération ($a_\alpha$(t+ $\Delta$t)) pour l'instant futur ((t+ $\Delta$t)) sur la base de chaque courbe de travail fonction de l'angle de collision qui a été introduite ($A_\alpha$(s)) qui a été introduite et dans lequel l'accélération (a) supposée pour l'instant futur ((t+ $\Delta$t)) est comparée avec l'accélération estimée ($a_\alpha$(t+ $\Delta$t)).

**17.** Procédé selon la revendication 16, dans lequel la courbe de travail ($A_\alpha$(s)) fonction de l'angle de collision qui est utilisée pour des calculs suivants est celle qui forme la base pour l'accélération estimée ($a_\alpha$(t+ $\Delta$t)) qui présente le plus petit écart par rapport à l'accélération supposée (a).

**18.** Procédé selon la revendication 16, dans lequel la courbe de travail ($A_\alpha$(s)) fonction de l'angle de travail de collision qui prédétermine l'angle de collision ($\alpha$) est celle qui forme la base pour l'accélération estimée ($a_\alpha$(t+ $\Delta$t)) qui présente le plus petit écart par rapport à l'accélération supposée (a) et dans lequel un moyen de protection des occupants (3) est commandé en fonction de l'angle de collision ($\alpha$) obtenu de cette façon.

**19.** Procédé selon une des revendications précédentes, dans lequel le travail (A(s)) à produire pour une déformation (s) de la carrosserie est déterminé au cours d'un test de collision.

**20.** Procédé selon la revendication 19, dans lequel le travail A(s)) à produire pour une déformation (s) de la carrosserie est déterminé dans un test de collision exécuté avec une haute vitesse de collision et dans un test de collision exécuté avec une basse vitesse de collision.

**21.** Dispositif pour commander un moyen de protection des occupants d'un véhicule, comprenant
un capteur d'accélération (1) destiné à détecter une accélération (a) du véhicule,
une mémoire (22) dans laquelle sont enregistrés la masse (m) du véhicule et la relation de dépendance entre la déformation (s) de la carrosserie et le travail (A(s)) à produire pour cela, et
une unité de calcul (21) qui est conçue pour commander le moyen de protection des occupants (3) en fonction de l'accélération (a), du travail (A) et de la masse (m) du véhicule.

# FIG 1

# FIG 2

## FIG 3

## FIG 4